# EUROPEAN PATENT APPLICATION

(11) **EP 2 063 616 A1**
(43) Date of publication of application: **27.05.2009**
(21) Application number: 08168740.2
(22) Date of filing: 10.11.2008
(51) Int. Cl.: H04M 1/725, H04M 1/73

(54) **Method for performing display in cell phone and cell phone thereof**

(30) Priority: 26.11.2007 CN 200710178102
(71) Applicant: Lenovo (Beijing) Limited, Haidan District Beijing 100085 (CN)
(72) Inventor: Liang, Donghua, 100084, Beijing (CN); Yang, Qingshun, 100085, Beijing (CN)
(74) Representative: Barth, Stephan Manuel

(57) **Abstract**

A method for performing display in a cell phone and a cell phone thereof are provided in the present invention. The cell phone comprises a storage module for storing data information consisting of text or numbers. The cell phone further comprises: a battery for supplying power; a display module, connected to the storage module and the battery respectively, for displaying the data information using power remaining in the battery when the cell phone is in a power-off state. According to the present invention, in a case where the cell phone may not be powered on, a low power consumption module may be used with power remaining in the cell phone for inquiring numbers of recent answered calls, dialed calls and missed calls, so as to guarantee that the user may use these records to place a call immediately, and to avoid from missing an opportunity of communication since the phone number cannot be found.

## Description

### BACKGROUND OF THE INVENTION

### FIELD OF INVENTION

The present invention relates to a mobile terminal, particularly to a method for performing display in a cell phone and a cell phone thereof.

### DESCRIPTION OF PRIOR ART

With development of the communication technology, a cell phone has become a necessary communication apparatus. Generally, a battery of the cell phone can be used for three or four days before recharging is needed. It often happens that the cell phone is out of power and can not continue for use.

Generally, a user does not carry a charger or a backup battery with him or her when they go to work or go shopping. In these cases, when the power of the cell phone is not enough, the cell phone cannot be charged, neither can the battery be replaced immediately. Then the cell phone may not be powered on.

However, when the cell phone is to be powered off due to the insufficient power, if an important incoming call comes at this time, the cell phone may be forced to be powered off due to the insufficient power of the battery during the call, and cannot be powered on again. lf the number of the incoming call cannot be recorded at this time, the call may not be continued even if there is a public telephone or a telephone may be borrowed from others.

Furthermore, if there is an incoming call when the power of the cell phone is not sufficient, it is possible that the cell phone cannot be powered on due to the insufficient power when it is ringing.

Similarly, if there is an dial-out call when the power of the cell phone is not sufficient, it is possible that the cell phone in communication is forced to be powered off and cannot be powered on again due to the insufficient power.
Of course, the user may carry backup batteries. However, when the battery is replaced, records such as numbers of answered calls, dialed calls and missed calls will be lost. And, the power of the backup battery may also run out.

Therefore, when the power of the cell phone battery is not sufficient, the cell phone cannot be powered on. It is hard to use calls information stored in the cell phone, especially to obtain the numbers of recent calls, so as to communicate on a fixed telephone, causing inconvenience to the user.

### SUMMARY OF THE INVENTION

An object of present invention is to provide a method for performing display in a cell phone and a cell phone thereof, in order to resolve a technical problem of not able to use recent call information stored in the cell phone in a case that the cell phone cannot be powered on.

To achieve the above object, a cell phone is provided in present invention, which comprises a storage module for storing data information including text or numbers; a battery for supplying power; a display module, connected to the storage module and the battery respectively, for displaying the data information using power remaining in the battery when the cell phone is in a power-off state.

Preferably, the data information is a phone number and/or a short message operated by a user of the cell phone.

Preferably, the display module is a display screen of the cell phone or another screen separated from the display screen.

Preferably, the operated phone number comprises a number of an answered call, a number of a dialed call and a number of a missed call.

Preferably, the display module comprises a seven-segment code mono liquid crystal display (LCD) screen.

Preferably, the display module comprises a control key for controlling display of the data information.

Preferably, the mono LCD screen is a transparent liquid crystal sheet disposed on a screen of the cell phone.

Preferably, the mono LCD screen is a time display screen of a dual-screen cell phone.

To achieve the above objects, a method for performing display in a cell phone is provided in the present invention. The method comprises steps of: making the cell phone to enter into a state of power-off, wherein there is still remaining power in a battery at this time; supplying a display module with the remaining power; and displaying data information consisting of text and/or numbers.

Preferably, the data information is a phone number and/or a short message operated by a user of the cell phone.

The technical effects of an embodiment of the present invention are as follows:
1) in a case that the cell phone cannot be powered on, recent numbers of answered calls, dialed calls and missed calls may be inquired by using the low power consumption display module supplied by remaining power of the cell phone, so as to guarantee that the user may use these records to place a call immediately, and to avoid from missing an opportunity of communication since the phone number cannot be found.
2) the FIFO technology and the scrolling display technology for the seven-segment code mono LCD screen may be used with convenient operations and a low cost.

### BRIEF DESCRIPTION OF THE DRAWINGS

Fig. 1 is an illustrative diagram of a storage module of a cell phone according to an embodiment of the present invention;
Fig. 2 is an internal structure view of a cell phone according to an embodiment of the present invention;
Fig. 3 is an illustrative diagram of a display module of a cell phone according to an embodiment of the present invention;
Fig. 4 is an illustrative diagram of a phone number to be displayed according to an embodiment of the present invention; and
Fig. 5 is a flowchart of a method embodiment of the present invention.

### DETAILED DESCRIPTION OF PREFERRED EMBODIMENTS

Hereinafter, present invention will be further described in detail by referring to the drawings and the embodiments in order to make the objects, technical scheme and advantages of the present invention more apparent.

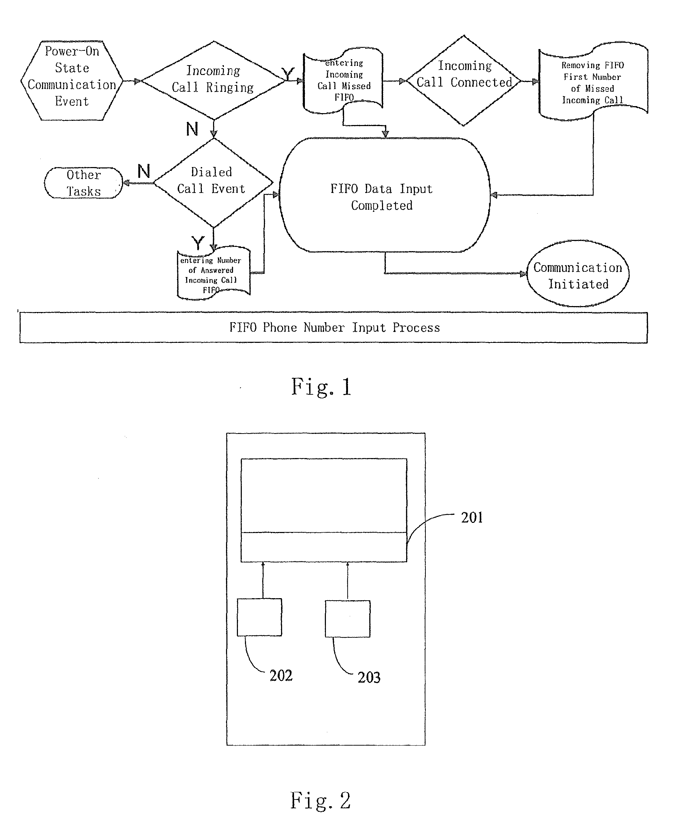

Fig. 1 is an illustrative diagram of operating principle of a storage module of a cell phone according to an embodiment of the present invention. The storage module of the cell phone uses a FIFO (First In, First Out) technology for storing phone numbers recently operated by the cell phone. The FIFO technology is well known and the description thereof is omitted.

Fig. 2 is an internal structure view of the cell phone according to the embodiment of the present invention. As shown in Fig.2, the cell phone in the embodiment of the present is added a display module 201 which may use a seven-segment mono liquid crystal display (LCD) screen with low power consumption. The display module 201 is connected to a storage module 202, so as to display the recently operated phone numbers stored in the storage module. The display module 201 is connected to a battery 203 of the cell phone. In a case where the cell phone is powered off due to the insufficient power, the remaining power in the battery 203 of the cell phone may be used to supply power.

Furthermore, the storage module 202 may store short messages recently operated by the cell phone. The display module 201 may also display the short messages recently operated by the cell phone. The display module may be a display screen of the cell phone or another screen separated from the display screen.

A convenient way to determine the remaining power of the battery of the cell phone is to measure a voltage. Generally, a nominal voltage of the battery of the cell phone is 3.7V/3.6V (the voltage may be different due to the different designs for electric cores, and the new type of the battery may have larger capacity and mostly be 3.7V). The battery of the cell phone according to the embodiment of the present invention has parameters as follows:
Charging Cut-Off Voltage: 4.2V/4.1V (at this time, the power of the battery is 100%) Cell phone Power-Off Voltage: 3.5V (generally)
Battery Discharging Lower Limit: 2.75V/2.7V

The relationship between the remaining power of the battery and the voltage is as follows: (the Charging Cut-Off Voltage of 4.2V is taken as an example):
4.20V----100%
3.95V----75%
3.85V----50%
3.73V----25%
3.50V----5%
2.75V----0%

In the embodiment of the present invention, the low power consumption display module may use, for example, a MCU (Micro Control Unit), in which the operation parameters are 8.5 µ A, 2.0V. Thus, when the cell phone is powered-off due to the insufficient power, the power of battery from 3.5V to 2.75V is 5%. If the total power is of 600mAh, there is still power of 30mAh enabling the low power consumption display module to operate for 3000 hours or so. Therefore, the remaining power of the battery is sufficient to support the operation of the low power consumption display module. And, since the power consumption of the low power consumption display module is low, the probability of deeply discharging by the battery is low. Moreover, a battery shield is disposed in the battery encapsulation for a low voltage protection, which is generally at 2.5V or so. There would not be a negative effect unless the deep discharge is performed.

Thus, in the embodiment of the present invention, the remaining power of the battery in the cell phone may be used to guarantee the display operation of the low power consumption display module. Not only an additional battery may not be needed, but also the deep discharge of the battery cannot happen, producing no negative effect.

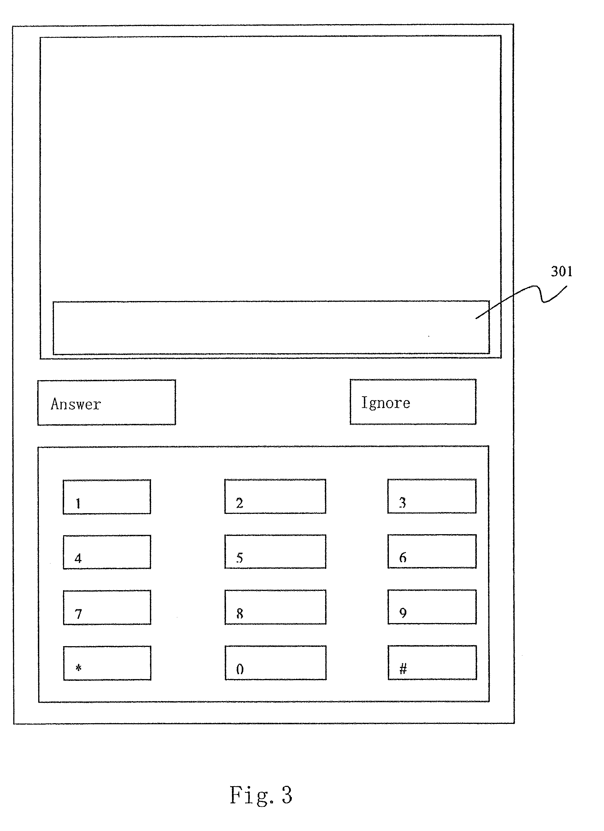

Fig. 3 is an illustrative diagram of the low power consumption display module of the cell phone according to an embodiment of the present invention. The low power consumption display module displays a phone number with a seven-segment code mono LCD screen 301. The mono LCD screen 301 is a transparent liquid crystal sheet on the screen of the cell phone. When the cell phone is powered on, the mono LCD screen 301 is in a transparent state and does not display. When the cell phone is powered off, the mono LCD screen 301 starts automatically to display recently operated phone numbers. The display screen in the embodiment of the present invention has a very low cost, whose price may refer to the price of a display screen of an electronic watch or a calculator. Of course, when the cell phone is a dual-screen cell phone, the display screen of the low power consumption display module may use a time display screen of the dual-screen cell phone directly.

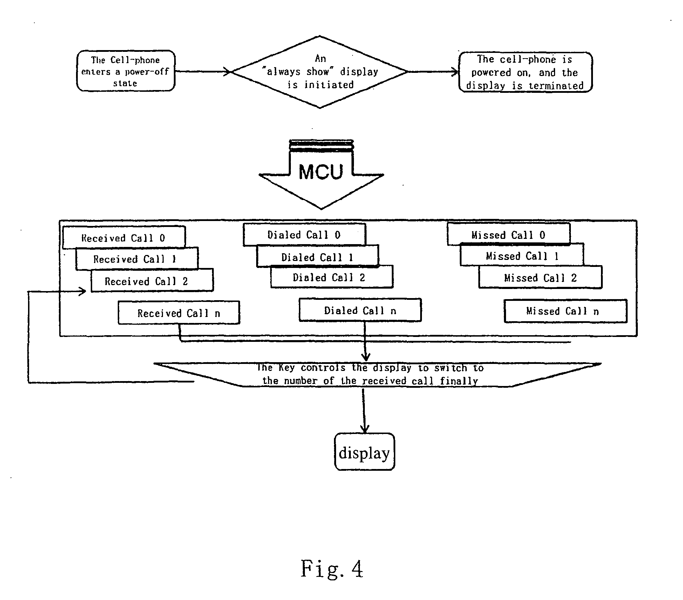

Fig. 4 is an illustrative diagram of a recently operated phone number to be displayed according to the embodiment of the present invention. The phone number includes a number of an answered call, a number of a dialed call and a number of a missed call. During the display process, the displayed number may be switched by using a control key which utilizes a weak backlight.

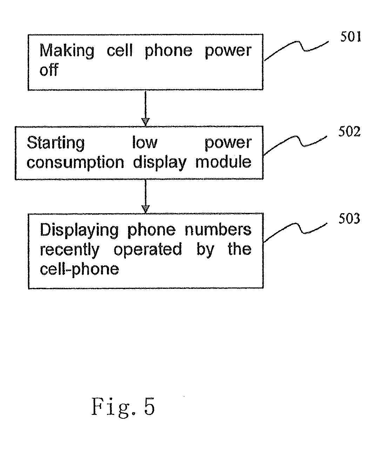

Fig. 5 is a flowchart of a method embodiment of the present invention. The embodiment of the cell phone display method comprises:
step 501, making the cell phone enter into a state of power-off, wherein the power-off of the cell phone may be a normal power-off, or a power-off due to insufficient power of the battery in which there is still remaining power at this time; step 502, starting the low power consumption display module; and
step 503, displaying data information consisting of text and/or numbers such as a recently operated phone number.

Additionally, the method further comprises: controlled-displaying the numbers of the answered calls, dialed calls and missed calls in the recently operated phone numbers.

As seen from the above, the technical effects of an embodiment of the present invention are as follows:
1) in a case that the cell phone cannot be powered on, recent numbers of answered calls, dialed calls and missed calls may be inquired by using a low power consumption display module supplied by remaining power of the cell phone, so as to guarantee that the user may use these records to place a call immediately, and to avoid from missing an opportunity of communication since the phone number cannot be found.
2) the FIFO technology and the scrolling display technology for the seven-segment code mono LCD screen may be used with convenient operations and a low cost.

The above is only the preferred embodiments of the present invention and the present invention is not limited to the above embodiments. Therefore, any modifications, substitutions and improvements to the present invention are possible without departing from the spirit and scope of the present invention.

## Claims

1. A cell phone, comprising:
a storage module configured to store data information including text or numbers;
a battery configured to supply power for the cell phone;
a display module connected to the storage module and the battery respectively, the display module configured to display the data information using power remained in the battery when the cell phone is in power-off state.

2. The cell phone according to Claim 1, wherein, the data information is a phone number and/or a short message operated by a user of the cell phone.

3. The cell phone according to Claim 2, wherein, the display module is a display screen of the cell phone or another screen separated from the display screen.

4. The cell phone according to Claim 2, wherein, the phone number includes calling telephone numbers, called telephone numbers and missed calling telephone numbers.

5. The cell phone according to anyone of Claims 1, wherein, the display module is a seven-segment code mono liquid crystal display (LCD) screen.

6. The cell phone according to Claim 5, wherein, the display module comprises a control key for controlling display of the data information.

7. The cell phone according to Claim 5, wherein, the mono LCD screen is a transparent liquid crystal sheet disposed on the cell phone.

8. The cell phone according to Claim 5, wherein, the mono LCD screen is a time display screen.

9. A method for performing display, comprising:
making a cell phone enter into power off state, wherein the battery of the cell phone has remaining power;
supplying a display module with the remaining power; and
displaying data information stored in the cell phone.

10. The method according to claim 9, wherein the data information includes text and/or numbers.

11. The method according to claim 10, wherein, the text is a short message operated by a user of the cell phone; the number is calling telephone numbers, called telephone numbers or missing calling telephone numbers.

12. A cell phone, comprising:
means for making a cell phone enter into power off state, wherein the battery of the cell phone has remaining power;
means for supplying a display module with the remaining power; and means for displaying data information stored in the cell phone.

13. The cell phone according to claim 12, wherein the data information includes text and/or numbers.

14. The cell phone according to claim 13, wherein the text is a short message operated by a user of the cell phone; the number is calling telephone numbers, called telephone numbers or missing calling telephone numbers.

15. A cell phone comprisng:
at least one compenents, said at least one components configured to:
making a cell phone enter into power off state, wherein the battery of the cell phone has remaining power;
supplying a display module with the remaining power; and
displaying data information stored in the cell phone.

16. The cell phone according to claim 15, wherein the data information includes text and/or numbers.

17. The cell phone according to claim 16, wherein the text is a short message operated by a user of the cell phone; the number is calling telephone numbers, called telephone numbers or missing calling telephone numbers.
